# EUROPÄISCHE PATENTSCHRIFT

(11) **EP 1 962 064 B1**
(45) Veröffentlichungstag und Bekanntmachung des Hinweises auf die Patenterteilung: **03.10.2012**
(21) Anmeldenummer: 07122249.1
(22) Anmeldetag: 04.12.2007
(51) Int. Cl.: G01D 9/00, G01L 5/24, B25B 23/142

(54) **Winkelmesseinrichtung**
Angle measuring equipment
Dispositif de mesure d'angle

(30) Priorität: 22.02.2007 DE 202007002793 U
(43) Veröffentlichungstag der Anmeldung: 27.08.2008
(73) Patentinhaber: Eduard Wille GmbH & Co KG, 42349 Wuppertal (DE)
(72) Erfinder: Lucke, Michael, 42349 Wuppertal (DE)
(74) Vertreter: Weisse, Renate

(56) Entgegenhaltungen:
- EP-A- 1 022 097
- DE-U1-202004 003 050
- DE-U1-202004 017 472
- DE-U1-202006 016 830
- US-A1- 2002 152 820
- US-A1- 2003 065 456
- US-A1- 2005 160 885

## Beschreibung

### Technisches Gebiet

Die Erfindung betrifft eine Winkelmesseinrichtung zur Messung des Anziehwinkels eines Betätigungswerkzeugs zum Anziehen von Schraubverbindungen, wobei die Winkelmesseinrichtung lösbar an dem Betätigungswerkzeug befestigt ist *und wobei Drehwinkelmesssensoren (20) zur elektronischen Erfassung eines Drehwinkels ohne äußere Referenz vorgesehen sind.*

### Stand der Technik

Winkelmesseinrichtungen zur Messung des Anziehwinkels werden unter anderem bei einem drehwinkelgesteuerten Anziehen von Schrauben oder Muttern verwendet. Dabei wird beispielsweise mit einem Drehmomentschlüssel eine Schraubverbindung bis zu einem vorgegebenen Setzdrehmoment angezogen. Mit Erreichen des Setzdrehmoments hat sich eine Schraubverbindung gesetzt, d. h. alle beteiligten Elemente, wie beispielsweise ein Schraubenkopf, eine Mutter und zu verbindende Werkstücke liegen nach Flachdrücken aller Unebenheiten glatt aufeinander. Anschließend erfolgt ein weiterer Anziehvorgang durch ein Weiterdrehen um einen bestimmten, vorgegebenen Drehwinkel. Dadurch wird eine optimale Vorspannkraft der Verschraubung erreicht.

Es ist bekannt, mechanische Winkelmesseinrichtungen einfach lösbar mit einem Betätigungswerkzeug zu verbinden. Beispielsweise wird in der DE 296 22 318 U1 eine mechanische Drehwinkelmessscheibe offenbart, welche eine Winkelmessscheibe und ein Winkelzeigerelement enthält. Die Winkelmessscheibe wird in der Drehachse an ein Betätigungswerkzeug angedockt und folgt somit einer Drehbewegung des Betätigungswerkzeugs. Das Winkelzeigerelement ist über einen Haltearm bzw. Referenzarm fest an einem Werkstück fixiert und verbleibt dadurch bei einer Drehbewegung des Betätigungswerkzeugs in seiner Ausgangposition. Einem Benutzer wird ein ausgeführter Drehwinkel mit dem Winkelzeigerelement auf der Winkelmessscheibe angezeigt.

*Die deutsche Gebrauchsmusterschrift* DE 20 2004 017 472 U1 *offenbart einen Drehmomentschlüssel mit einer Drehwinkel-Messvorrichtung. Die Drehwinkel-Messvorrichtung weist einen Drehwinkel-Aufnehmer und eine Drehwinkelanzeige auf. Der Drehwinkel-Aufnehmer enthält einen Multipol-Magnetring, der bei einem Schraubenanzug mit der Drehbewegung mitgeführt wird. Ein Magnetsensor ist über eine Grundplatte und ein Abstützelement lagefixiert und drehgesichert. Der Magnetsensor führt daher die Drehbewegung bei einem Schraubenanzug nicht aus und misst die Drehbewegung des Multipol-Magnetrings bzw. den ausgeführten Drehwinkel. Das Abstützelement als Referenzarm lässt sich mit einem Haltefuß und einem darin integrierten Permanentmagneten an magnetische Untergründe fixieren. Auf diese Weise dient die räumliche Lage der Grundplatte mit dem Magnetsensor als äußer Referenz gegenüber dem sich drehenden Multipol-Magnetring. Der Drehwinkel-Aufnehmer lässt sich zusammen mit einem Werkzeugkopf vom Drehmomentschlüssel lösen und austauschen.*

*Die* US 2003/0065456 A1 *offenbart eine Winkelmesseinrichtung, welche lösbar an einem Betätigungswerzeug befestigt werden kann. Die Winkelmesseinrichtung verfügt über einen Drehwinkelsensor, welcher als Gyroskop ausgebildet ist und ohne äußere Referenz auskommt. Die Winkelmesseinrichtung wird zwischen dem Kopf eines Betätigungswerkzeuges und einem Werkzeugeinsatz gesteckt. Dadurch wird der räumliche Arbeitsbereich relativ groß. Die Winkelmesseinrichtung ist zudem durch das Gyroskop als Drehwinkelsensor relativ kompliziert aufgebaut und in der Herstellung somit kostenintensiv.*

*Das deutsche Gebrauchsmuster* DE 20 2004 003050 U1 *offenbart ein Drehmomentmessgerät, welches an verschiedenen Messgeräten lösbar befestigt werden kann.*

*Die* US 2005/0160885A1 *beschreibt einen Zähler für einstellbare Drehmomentwerte. Dieser Zähler kann an Drehmomentschlüsseln lösbar angebracht werden. Der Zähler zählt, wie oft das eingestellte Drehmoment erreicht wurde.*

Nachteilig bei den bekannten mechanischen Winkelmesseinrichtungen ist, dass sie direkt am Ort einer Verschraubung eingesetzt werden und dazu ausreichend Arbeitsplatz vorhanden sein muss. Auch der Referenzarm muss in der Nähe der Verschraubung angesetzt werden bzw. ansetzbar sein. Dadurch wird der Einsatzbereich der bekannten mechanischen Winkelmesseinrichtungen eingeschränkt. Das Ansetzen des Referenzarms erhöht zudem den Arbeitsaufwand bei einer Verschraubung für einen Benutzer. Ferner ist bei den bekannten mechanischen Winkelmesseinrichtungen keine automatische Dokumentation von gemessenen Drehwinkeln möglich.

Es sind auch elektronische Drehmomentschlüssel mit integrierter elektronischer Drehwinkelmessung bekannt, z.B. aus der Druckschrift DE 296 15 123. Diese elektronischen Drehmomentschlüssel ermöglichen sowohl die Messung eines Drehmoments als auch eine Drehwinkelmessung und eignen sich daher besonders für ein drehwinkelgesteuertes Anziehen von Schrauben oder Muttern. Die Winkelmesseinrichtung dieser Drehmomentschlüssel ist jedoch fest mit dem Drehmomentschlüssel verbaut und kann nachteilig nicht mit anderen Betätigungswerkzeugen verwendet werden.

### Offenbarung der Erfindung

Aufgabe der Erfindung ist es daher, die Nachteile des Standes der Technik zu vermeiden und eine an verschiedene Betätigungswerkzeuge ankoppelbare Winkelmesseinrichtung zu schaffen, welche *vielseitig und mit geringem Aufwand einsetzbar ist.*

Erfindungsgemäß wird die Aufgabe dadurch gelöst, dass bei einer Winkelmesseinrichtung zur Messung des Anziehwinkels eines Betätigungswerkzeugs zum Anziehen von Schraubverbindungen der eingangs genannten Art *die Winkelmesseinrichtung Befestigungsmittel zur lösbaren Befestigung der Winkelmesseinrichtung an einem Hebelarm des Betätigungswerkzeugs enthält und die Drehwinkelmesssensoren als Beschleunigungssensoren ausgebildet sind.*

Die Erfindung beruht auf dem Prinzip, zur Drehwinkelmessung Drehwinkelmesssensoren zu verwenden, welche ohne äußere Referenz, insbesondere ohne einen Referenzarm, einen von einem Benutzer ausgeführten Drehwinkel messen. Die Drehwinkelmesssensoren erfassen einen ausgeführten Drehwinkel relativ zu einer Ausgangsstellung des Betätigungswerkzeugs bei einem Startzeitpunkt der Messung.

Die erfindungsgemäße Winkelmesseinrichtung muss nicht in der Nähe eines Betätigungskopfes an dem Betätigungswerkzeug befestigt werden. Eine Ankopplung an das Betätigungswerkzeug erfolgt vorteilhaft beispielsweise an einem Hebelarm oder Griff. Zudem wird kein Referenzarm benötigt. Daher ist die erfindungsgemäße Winkelmesseinrichtung auch bei eingeschränkten Raumverhältnissen am Ort einer Verschraubung vielseitig einsetzbar. Weiterhin wird eine Drehwinkelmessung für einen Benutzer erleichtert und ist zügiger durchführbar, da ein umständliches Anbringen eines Referenzarmes entfällt. Ein weiterer Vorteil ergibt sich dadurch, dass die Winkelmesseinrichtung an verschiedenen Betätigungswerkzeugen angekoppelt werden kann. Der Benutzer benötigt kostengünstig nur eine erfindungsgemäße Winkelmesseinrichtung, um mit einer Vielzahl von Betätigungswerkzeugen eine Drehwinkelmessung durchzuführen.

Eine vorteilhafte Ausgestaltung der erfindungsgemäßen elektronischen Winkelmesseinrichtung wird erzielt, wenn die Drehwinkelmesssensoren als Beschleunigungssensoren ausgebildet sind. Als Beschleunigungssensoren sind beispielsweise piezoelektrisch oder als MEMS (Micro-Electro-Mechanical System) aufgebaute Sensoren einsetzbar. Beschleunigungssensoren messen eine Beschleunigung bzw. den Winkel einer ausgeführten Drehbewegung relativ zu einem Startwert sehr genau und ohne äußere Referenzpunkte. Zudem liegen Beschleunigungssensoren in miniaturisierter Bauweise vor. Die erfindungsgemäße Winkelmesseinrichtung lässt sich daher sehr raumsparend ausgestalten und ermöglicht eine präzise Drehwinkelmessung ohne äußere Referenz.

Die Drehwinkelmesssensoren sind in einer weiteren bevorzugten Variante der erfindungsgemäßen Winkelmesseinrichtung als Gyroskope ausgebildet. Auch Gyroskope eignen sich für die präzise Messung einer Beschleunigung bzw. eines Drehwinkels relativ zu einem Startwert und ohne äußere Bezugspunkte. Entsprechend lässt sich auch durch eine Winkelmessvorrichtung mit Gyroskopen eine genaue und referenzlose Bestimmung eines ausgeführten Drehwinkels bei einer Verschraubung ausführen.

Eine zweckmäßige Ausgestaltung der Erfindung sieht eine Anzeige zur Darstellung des jeweils gemessenen Winkels vor. Einem Benutzer wird während eines Schraubvorgangs unmittelbar ein aufgebrachter Drehwinkel angezeigt. Dies ermöglicht dem Benutzer eine Beendigung des Schraubvorgangs exakt beim Erreichen eines vorgegebenen Drehwinkels. Ferner ist mittels der Anzeige eine Darstellung von weiteren Informationen, wie beispielsweise gespeicherten und/oder vorgegebenen Drehwinkeln, Betriebszustände der erfindungsgemäßen Winkelmesseinrichtung oder vom Benutzer auszuwählende Steuerungskommandos bzw. -abfragen durchführbar.

In einer Ausbildung der Erfindung ist eine Verbindung zur Nutzung der Spannungsversorgung des Betätigungswerkzeugs vorgesehen ist. Dies hat den Vorteil, dass eine Spannungsversorgung in der Winkelmesseinrichtung durch die Spannungsversorgung des Betätigungswerkzeugs unterstützt wird oder gänzlich entfallen kann. Eine Spannungsversorgung durch das Betätigungswerkzeug kann beispielsweise durch Kontakte an der Winkelmessvorrichtung und der Betätigungsvorrichtung, Steckverbindungen oder induktiv erfolgen. Die erfindungsgemäße Winkelmesseinrichtung wird einerseits kompakter und leichter ausführbar. Andererseits werden durch einen vereinfachten Aufbau Herstellungskosten gesenkt.

In einer weiteren bevorzugten Ausbildung der Erfindung ist eine mikroprozessorgesteuerte Steuerungseinheit mit einem Speicher, insbesondere zur digitalen Speicherung von gemessenen Drehwinkeldaten enthalten. Durch eine digitale Speicherung von gemessenen Drehwinkeln wird eine Dokumentation dieser Drehwinkel mit Hilfe der mikroprozessorgesteuerten Steuerungseinheit für einen Benutzer wesentlich erleichtert. Die Erstellung eines Protokolls oder eine Archivierung von gemessenen Drehwinkeln wird weitestgehend automatisch möglich. Dadurch wird eine arbeitsaufwendige und fehlerträchtige manuelle Erfassung von gemessenen Drehwinkeln vermieden. Weiterhin können zur Arbeitserleichterung und Fehlervermeidung für verschiedene Schraubvorgänge jeweils vorgegebene Drehwinkel in dem Speicher gespeichert und abgerufen werden.

Bei einer Ausgestaltung der erfindungsgemäßen elektronischen Winkelmesseinrichtung sind Übertragungsmittel zur Übertragung der gemessenen Drehwinkeldaten an eine externe Verarbeitungseinheit vorgesehen. Dies hat den Vorteil, das entsprechende externe Verarbeitungs-, und Speicher- und Ausgabekapazitäten für die elektronische Winkelmesseinrichtung nutzbar werden. Gemessene Drehwinkeldaten können beispielsweise an einen PC übertragen und dort verarbeitet, kontrolliert und gespeichert werden. Auch ein Ausdruck von Drehwinkeldaten durch einen an die externe Verarbeitungseinheit angeschlossenen Drucker oder eine Weiterleitung von Drehwinkeldaten über ein Datennetz an eine Zentrale ist unproblematisch möglich.

Die Übertragungsmittel sind in einer Ausbildung der Erfindung vorteilhaft als Funk-, Infrarot- und/oder Kabelverbindung ausgestaltet. Eine Kabelverbindung ist sehr unempfindlich gegenüber Umwelteinflüssen und gewährleistet eine sichere und energiesparende Übertragung von Daten. Dem hingegen wird mit einer Infrarot- oder Funkverbindung die Bewegungsfreiheit eines Benutzers in keiner Weise eingeschränkt. Dies verbessert eine anwenderfreundliche Handhabung der erfindungsgemäßen Winkelmesseinrichtung und unterstützt eine Unfallverhütung. Je nach Arbeitsumgebung und Anwendungsfall wird ein Benutzer eine Funk-, Infrarot- oder Kabelverbindung bevorzugen.

Gemäß einer bevorzugten Ausbildung der Erfindung ist ein Daten- und Steuerbus mit einer Schnittstelle, insbesondere einer kabellosen, zu einer mikroprozessorgesteuerten Steuerungseinheit des Betätigungswerkzeugs vorgesehen. Mit einem solchen Daten- und Steuerungsbus wird ein Austausch von Daten- und Steuerungssignalen zwischen der Winkelmesseinrichtung und dem Betätigungswerkzeug ermöglicht. Insbesondere ist die erfindungsgemäße Winkelmesseinrichtung über das Betätigungswerkzeug steuerbar und kann Drehwinkeldaten zur weiteren Verarbeitung an das Betätigungswerkzeug oder damit verbundenen, externen Verarbeitungseinheiten übermitteln. Dadurch wird ein Einsatz der Winkelmesseinrichtung für einen Benutzer vereinfacht.

In einer weiteren vorteilhaften Ausgestaltung der erfindungsgemäßen elektronischen Winkelmesseinrichtung weist das Betätigungswerkzeug und/oder die Winkelmesseinrichtung eine Triggervorrichtung auf, welche der Winkelmesseinrichtung ein Startsignal und/oder ein Stoppsignal für eine Messung übermittelt. Mit der Triggervorrichtung wird eine Drehwinkelmessung mit der Winkelmesseinrichtung automatisch gestartet oder beendet. Dazu kann beispielsweise das Betätigungswerkzeug beim Erreichen eines Setzdrehmoments ein elektronisches Signal an die Winkelmesseinrichtung übermitteln, woraufhin die Winkelmesseinrichtung mit einer Messung des Drehwinkels beginnt. Bei auslösenden Drehmomentschlüsseln ist auch eine Erfassung des Auslöseschlags, z.B. durch einen Akustiksensor, oder eine Erfassung des Auslöserucks, z.B. durch Beschleunigungssensoren möglich. Durch einen getriggerten Drehwinkelmessvorgang wird insbesondere eine drehwinkelgesteuerte Verschraubung für einen Benutzer erleichtert und schneller durchführbar. Ist kein externes Signal zum Triggern vorhanden kann ein spezieller Schalter zur Erzeugung eines solchen Triggersignals vorgesehen sein. Dieser wird manuell betätigt, um die Messung des Drehwinkels zu starten bzw. zu stoppen.

In einer bevorzugten Ausgestaltung der Erfindung weist das Betätigungswerkzeug eine Auslöseeinrichtung auf. Bei der Auslöseeinrichtung wird ein Winkel vorgegeben. Wenn dieser Winkel erreicht wird, löst das Betätigungswerkzeug aus, so dass beispielsweise eine Schraube nicht weiter angezogen werden kann. Es kann ggf. aber auch ein Signal erzeugen, um dem Anwender mitzuteilen, dass er nun eine Schraube nicht mehr weiter anziehen darf.

Vorteilhafterweise erzeugt die Triggervorrichtung ein Signal, welches von der Auslöseeinrichtung verarbeitet wird. Die Triggereinrichtung liefert der Auslöseeinrichtung dazu ein Signal, sobald ein zuvor eingestellter Winkel erreicht wir. Die Auslöseeinrichtung löst dann das Betätigungswerkzeug aus.

Weitere Ausgestaltungen und Vorteile ergeben sich aus dem Gegenstand der Unteransprüche, sowie den Zeichnungen mit den dazugehörigen Beschreibungen.

Ein Ausführungsbeispiel der Erfindung wird nachstehend unter Bezugnahme auf die zugehörigen Zeichnungen näher erläutert.

### Kurze Beschreibung der Zeichnung

- Fig. 1: zeigt in einer schematischen Prinzipskizze ein Ausführungsbeispiel einer elektronischen Winkelmesseinrichtung an einem Betätigungswerkzeug in einer Seitenansicht.
- Fig. 2: zeigt in einer schematischen Prinzipskizze das Ausführungsbeispiel einer elektronischen Winkelmesseinrichtung entsprechend Fig. 1 in einer Aufsicht.

### Bevorzugtes Ausführungsbeispiel

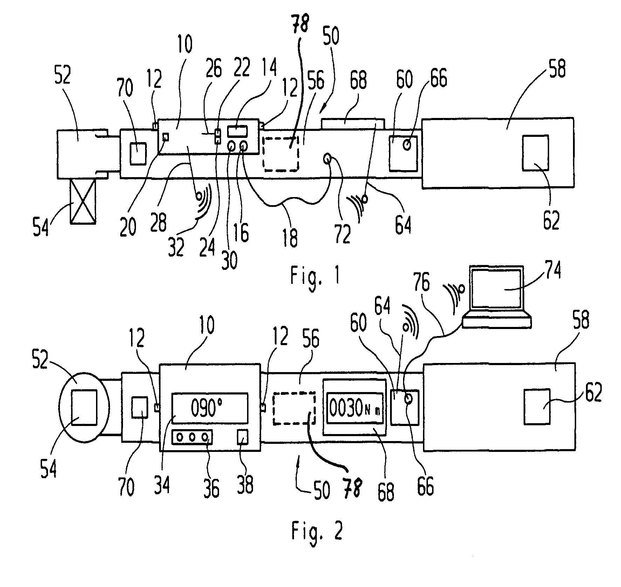

In Fig. 1 wird mit 10 eine elektronische Winkelmesseinrichtung bezeichnet, welche an einen elektronischen Drehmomentschlüssel 50 einfach und schnell lösbar befestigt ist. Der elektronische Drehmomentschlüssel 50 wird hier beispielhaft für ein Betätigungswerkzeug zum Anziehen von Schraubverbindungen dargestellt. Die Winkelmesseinrichtung 10 ist aber auch bei anderen Betätigungswerkzeugen wie beispielsweise einem mechanisch messenden oder auslösenden Drehmomentschlüssel, einer Knarre oder einem Schraubenschlüssel, einsetzbar.

Der elektronische Drehmomentschlüssel 50 enthält einen Schlüsselkopf 52 mit einer Vierkantkupplung 54 zum Ankuppeln von Steckwerkzeugen, sowie einen Hebelarm 56 mit einem Griff 58. Mit dem Hebelarm 56 kann ein Benutzer ein Drehmoment über den Schlüsselkopf 52 und ein Steckwerkzeug auf ein Verschraubungselement aufbringen. Zur Steuerung und zur Verarbeitung von gemessenen Drehmomenten verfügt der Drehmomentschlüssel 50 über eine mikroprozessorgesteuerte Steuerungseinheit 60. Die Steuerungseinheit 60 wird durch eine Spannungsversorgung 62 mit Spannung versorgt und nutzt Sende- und Empfangsmittel 64 zum kabellosen Austausch von Daten an ein externes Gerät. Alternativ oder zusätzlich ist ein Verbindungselement 66, beispielsweise Steckkontakte, zum kabelgebundenen Übermitteln von Daten an ein externes Gerät vorgesehen. Ferner beinhaltet der elektronische Drehmomentschlüssel 50 eine Anzeige 68, um z. B. gemessene Drehmomente darzustellen, und eine Triggervorrichtung 70, mit welcher beim Erreichen eines vorgegebenen Drehmoments ein elektronisches, akustisches, optisches oder fühlbares Signal erzeugt wird. Durch einen Spannungsverbindungselement 72 wird eine Spannungsversorgung von externen Geräten durch die Spannungsversorgung 62 des elektronischen Drehmomentschlüssels ermöglicht.

Die elektronische Winkelmesseinrichtung 10 enthält Befestigungsmittel 12 zur einfach lösbaren Befestigung der Winkelmesseinrichtung 10 an dem Drehmomentschlüsse150. Die Befestigung erfolgt bevorzugt am Hebelarm 56 zwischen Schlüsselkopf 52 und Griff 58. Es ist aber auch eine Befestigung der Winkelmesseinrichtung 10 am Schlüsselkopf 52, am Griff 58 oder am Ende des Hebelarms 56 beim Griff 58 möglich.

Zur Spannungsversorgung beinhaltet die Winkelmesseinrichtung 10 eine Batterie oder einen Akkumulator 14 und/oder ein Spannungsverbindungselement 16 für ein Spannungskabel 18. Mit dem Spannungsverbindungselement 16 lässt sich eine Spannungsversorgung der Winkelmesseinrichtung 10 über das Spannungskabel 18 und dem Spannungsverbindungselement 72 von der Spannungsversorgung 62 des Drehmomentschlüssels 50 einrichten. Das Spannungsverbindungselement 16 ist beispielsweise als Steckverbindung ausgebildet. Alternativ sind auch Kontakte denkbar, welche beim Befestigen der Winkelmesseinrichtung 10 an dem Drehmomentschlüssel 50 eine Verbindung zur Spannungsversorgung 62 des Drehmomentschlüssels 50 herstellen. Auch ein externes Netzteil kann an das Spannungsverbindungselement 16 zur Spannungsversorgung angeschlossen werden. Alternativ oder zusätzlich ist eine Spannungsversorgung mit Solarzellen oder induktiv möglich.

Als Drehwinkelmesssensoren beinhaltet die Winkelmesseinrichtung 10 Beschleunig ungssensoren 20, welche beispielsweise als piezoelektrische Sensoren, als MEMS (Micro-Electro-Mechanical System) oder als Gyroskope ausgebildet sind. Mit Hilfe der Beschleunigungssensoren 20 wird ein von einem Benutzer ausgeführter Drehwinkel ohne äußere Referenz, insbesondere ohne Referenzarm, ermittelt. Dieser Vorgang kann durch eine mikroprozessorgesteuerte Steuerungseinheit 22 in der Winkelmesseinrichtung 10 unterstützt werden. Die Steuerungseinheit 22 dient weiterhin zur Steuerung der Winkelmesseinrichtung 10 und speichert gemessene Drehwinkel in einem digitalen Speicher 24. Dazu ist in der Winkelmesseinrichtung 10 ein paralleler oderserieller Daten- und Steuerbus 26 integriert.

Eine Übermittlung von gemessenen Drehwinkeln an externe Geräte oder den Drehmomentschlüssel 50 wird mit Übertragungsmitteln 28 vorgenommen. Die Übertragungsmittel 28 ermöglichen ferner einen Austausch von anderen Daten oder Steuersignalen zwischen der Winkelmesseinrichtung 10 und externen Geräten bzw. dem Drehmomentschlüssel 50. Dazu bauen die Übertragungsmittel 28 beispielsweise eine Funk- oder Infrarotverbindung auf. Alternativ wird auch eine leitungsgebundene Verbindung über ein Verbindungselement 30 und elektrische oder optische Leitungen verwendet. Das Verbindungselement 30 ist beispielsweise als Steckverbindung ausgebildet. Zum Aufbau einer Verbindung zum Drehmomentschlüssel 50 sind auch Kontakte an der Winkelmesseinrichtung 10 möglich, welche bei einer Befestigungder Winkelmesseinrichtung 10 an dem Drehmomentschlüssel 50 mit entsprechenden Kontakten des Drehmomentschlüssels eine Verbindung eingehen.

In dem hier beschriebenen Ausführungsbeispiel wird mit Hilfe der Übertragungsmittel 28 eine Schnittstelle 32 zwischen dem Daten- und Steuerbus 26 und der Steuerungseinheit 60 des Drehmomentschlüssels 50 zum Austausch von Daten, Adressen und Steuersignalen realisiert. Eine solche Schnittstelle kann auch zu anderen Geräten aufgebaut werden.

Fig. 2 stellt das Ausführungsbeispiel aus Fig. 1 in einer Aufsicht dar. Gleiche Bestandteile werden daher mit identischen Bezugszeichen bezeichnet. Weitere Bestandteile der Winkelmesseinrichtung 10 und des Drehmomentschlüssels 50 werden im Folgenden mit Bezug auf Fig. 2 erläutert.

Die Winkelmesseinrichtung 10 enthält ferner eine Anzeige 34 zum Darstellenvon gemessenen, gespeicherten oder vorgegebenen Drehwinkeln. Auch weitere Informationen, wie beispielsweise Betriebszustände der Winkelmesseinrichtung 10 oder vom Benutzer auszuwählende Steuerungskommandos bzw. -abfragen werden mit der Anzeige 34 für den Benutzer angezeigt. Beim Erreichen eines vorgegebenen Drehwinkels erzeugt die Steuerungseinheit ein elektronisches Signal für ein externes Gerät oder den Drehmomentschlüssel 50. Mit entsprechenden, hier nicht dargestellten Mitteln, ist beim Erreichen eines vorgegebenen Drehwinkels auch eine Erzeugung eines zusätzlichen optischen, akustischen oder fühlbaren Signals für den Benutzer möglich.

Mit einer an der Winkelmesseinrichtung 10 vorgesehenen Bedienungseinheit 36 gibt der Benutzer Daten, beispielsweise Drehwinkel, vor und steuert die Winkelmesseinrichtung 10 manuell. Dazu kann der Benutzer mit der Bedienungseinheit 36 z.B. die Winkelmesseinrichtung ein- oder ausschalten, eine Drehwinkelmessung durch Tastendruck starten oder beenden, gemessene Drehwinkel im Speicher 24 speichern oder mit den Übertragungsmitteln 28 an andere Geräte, wie beispielsweise den Drehmomentschlüssel 50 übermitteln usw.

Eine Drehwinkelmessung wird wahlweise auch automatisch gestartet. Dazu verfügt die Winkelmesseinrichtung 10 über eine Triggereinrichtung 38. Die Triggereinrichtung 38 detektiert beispielsweise ein elektronisches Startsignal vom dem Drehmomentschlüssel 50 und startet daraufhin eine Drehwinkelmessung. Für auslösende Drehmomentschlüssel ist zur Erfassung eines Auslöseschlags ein hier nicht dargestellter Akustiksensor vorgesehen. Auch die Erfassung eines Auslöserucks durch die Beschleunigungssensoren 20 ist denkbar. Mit der Triggereinrichtung 38 wird nach dem Detektieren eines Auslöseschlags oder -rucks eine Drehwinkelmessung eingeleitet.

Die Funktionsweise und das Zusammenwirken der einzelnen Bestandteile der Winkelmesseinrichtung 10 werden im Folgenden beispielhaft anhand eines drehwinkelgesteuerten Schraubvorgangs näher erläutert. Dies erfolgt durch einen gleichzeitigen Bezug auf Fig. 1 und Fig. 2.

Zunächst koppelt der Benutzer die Winkelmesseinrichtung 10 mit den Befestigungsmitteln 12 an den Hebelarm 56 des elektronischen Drehmomentschlüssels 50 und stellt eine ausreichende Spannungsversorgung der Winkelmesseinrichtung10, beispielsweise durch Anschließen eines Spannungskabels 18 an die Spannungsverbindungselemente 16 und 72 sicher. Da die Winkelmesseinrichtung 10 nicht am Schlüsselkopf 52 befestigt werden muss und keinen Referenzarm benötigt, ist die Winkelmesseinrichtung 10 zusammenmit dem Drehmomentschlüssel 50 auch bei beengten Arbeitsplatzverhältnissen am Ort einer Verschraubung und somit vielseitig einsetzbar. Außerdem wird der drehwinkelgesteuerte Schraubvorgang für den Benutzer erleichtert und ist schneller durchführbar.

Nach einer Aktivierung der Winkelmesseinrichtung 10 durch den Benutzermit der Bedienungseinheit 36 initialisiert die Steuerungseinheit 22 die Winkelmesseinrichtung 10 für eine Drehwinkelmessung. Dabei stellt die Steuerungseinheit 22 mit dem Daten- und Steuerbus 26 und den Übertragungsmitteln 28 eine, z. B. funkbasierte Schnittstelle 32 über die Sende- und Empfangsmittel 64 zur Steuerungseinheit 60 des Drehmomentschlüssels her. Über die Schnittstelle 32 wird ein Daten- und Steuerungssignalaustausch zwischen der Winkelmesseinrichtung 10 und dem Drehmomentschlüssel 50 gewährleistet. Der Drehmomentschlüssel 50 ist seinerseits mit einer externen Verarbeitungseinheit 74 (s. Fig. 2) verbunden. Dazu wird entweder mit den Sende- und Empfangsmitteln 28 eine kabellose Verbindung, oder mit dem Verbindungselement 66 und einem Datenübertragungskabel 76 (s. Fig. 2) eine leitungsgebundene Verbindung zu der externen Verarbeitungseinheit 74 aufgebaut.

Vor Beginn des Schraubvorgangs kann ein Drehwinkel bzw. Anziehwinkel vorgegeben werden. Dazu kann entweder ein in dem Speicher 24 gespeicherter oder mit den Übertragungsmitteln 28 vom Drehmomentschlüssel 50 oder von der externen Verarbeitungseinheit 74 übermittelter Drehwinkel verwendet werden. Auch eine manuelle Eingabe eines Drehwinkels durch den Benutzer über die Bedienungseinheit 36 ist möglich. Entsprechendes gilt für ein vorgegebenes Drehmoment, beispielsweise ein Setzdrehmoment, bei dem Drehmomentschlüssel 50.

Nach Ansetzen des Drehmomentschlüssels 50 mit einem geeigneten Steckwerkzeug an die Schraube oder Mutter beginnt der Benutzer mit der Verschraubung. Das Erreichen des Setzdrehmoments wird dem Benutzer durch den Drehmomentschlüssel 50 signalisiert. Die Winkelmesseinrichtung 10 detektiert mit der Triggervorrichtung 70 das für den Benutzer vorgesehene Signal oder empfängt über die Schnittstelle 32 ein entsprechendes Signal von dem Drehmomentschlüssel 50. Daraufhin zeigt die Winkelmesseinrichtung 10 dem Benutzer den Beginn der Drehwinkelmessungan und stellt während der weiteren Drehbewegung permanent den jeweils gemessenen Drehwinkel auf der Anzeige 34 dar. Beim Erreichen des vorgegebenen Drehwinkels signalisiert das Winkelmessgerät 10 dem Benutzer das Ende der drehwinkelgesteuerten Verschraubung. Dies kann beispielsweise durch die Anzeige 34 oder ein zusätzlich vorgesehenes optisches, akustisches oder fühlbares Signal erfolgen.

Das Signal der Triggereinrichtung kann aber auch dazu verwendet werden, um einen Drehmomentschlüsse 50 bei einem voreingestellten Winkel auszulösen. Dazu verfügt der Drehmomentschlüssel 50 über eine Auslöseeinrichtung 78. Diese Auslöseeinrichtung 78 enthält einen Mechanismus, welcher verhindert, dass beispielsweise eine Schraube über einen vorgegebenen Winkel angezogen werden kann.

Anschließend wird der zuletzt gemessene Drehwinkel zur Dokumentation in dem Speicher 24 gespeichert und/oder über die Schnittstelle 32 an den Drehmomentschlüssel 50 bzw. die externe Verarbeitungseinheit 74 übermittelt. Mit der externen Verarbeitungseinheit 74 lässt sich der gemessenen Drehwinkel bzw. die gesamten drehwinkelgesteuerte Verschraubung überwachen und archivieren. Auch ein Ausdruck eines Protokolls mit einem Drucker ist möglich.

Durch die weitestgehend automatische Erfassung gemessener Drehwinkel vereinfacht die Winkelmesseinrichtung 10 eine Dokumentation von Schraubvorgängenwesentlich. Auch der eigentliche Schraubvorgang ist ohne Verwendung eines Referenzarms für einen Benutzer unkomplizierter und zügiger durchführbar. Die Winkelmesseinrichtung 10 ist vielseitig, insbesondere auch bei beengten Platzverhältnissen einsetzbar und kann für den Benutzer kostensparend mit vielen verschiedenen Drehmomentschlüsseln benutzt werden.

### Bezugszeichenliste

- 10: Winkelmesseinrichtung
- 12: Befestigungsmittel
- 14: Akkumulator/Batterie
- 16: Spannungsverbindungselement
- 18: Spannungskabel
- 20: Beschleunigungssensoren
- 22: Steuerungseinheit
- 24: Speicher
- 26: Daten- und Steuerbus
- 28: Übertragungsmittel
- 30: Verbindungselement
- 32: Schnittstelle
- 34: Anzeige
- 36: Bedienungseinheit
- 38: Triggereinheit
- 50: elektronischer Drehmomentschlüssel
- 52: Schlüsselkopf
- 54: Vierkantkupplung
- 56: Hebelarm
- 58: Griff
- 60: Steuerungseinheit
- 62: Spannungsversorgung
- 64: Sende- und Empfangsmittel
- 66: Verbindungselement
- 68: Anzeige
- 70: Triggervorrichtung
- 72: Spannungsverbindungselement
- 74: externe Verarbeitungseinheit
- 76: Datenübertragungskabel
- 78: Auslöseeinrichtung

## Patentansprüche

1. Winkelmesseinrichtung (10) zur Messung des Anziehwinkels eines Betätigungswerkzeugs (50) zum Anziehen von Schraubverbindungen, wobei die Winkelmesseinrichtung (10) lösbar an dem Betätigungswerkzeug (50) befestigt ist, *wobei* Drehwinkelmesssensoren zur elektronischen Erfassung eines Drehwinkels ohne äußere Referenz vorgesehen sind, **dadurch gekennzeichnet, dass** die Winkelmesseinrichtung (10) Befestigungsmittel (12) zur lösbaren Befestigung der Winkelmesseinrichtung (10) an einem Hebelarm (56) des Betätigungswerkzeugs (50) enthält und die Drehwinkelmesssensoren als Beschleunigungssensoren (20) ausgebildet sind.

2. Winkelmesseinrichtung (10) zur Messung des Anziehwinkels eines Betätigungswerkzeugs (50) zum Anziehen von Schraubverbindungen nach *Anspruch 1* **dadurch gekennzeichnet, dass** Drehwinkelmesssensoren als Gyroskope ausgebildet sind.

3. Winkelmesseinrichtung (10) zur Messung des Anziehwinkels eines Betätigungswerkzeugs (50) zum Anziehen von Schraubverbindungen nach einem der Ansprüche 1 bis 2, **dadurch gekennzeichnet, dass** eine Anzeige (34) zur Darstellung des jeweils gemessenen Winkels vorgesehen ist.

4. Winkelmesseinrichtung (10) zur Messung des Anziehwinkels eines Betätigungswerkzeugs (50) zum Anziehen von Schraubverbindungen nach einem der Ansprüche 1 bis 43, **dadurch gekennzeichnet, dass** eine Verbindung (18) zur Nutzung der Spannungsversorgung (62) des Betätigungswerkzeugs (50) vorgesehen ist.

5. Winkelmesseinrichtung (10) zur Messung des Anziehwinkels eines Betätigungswerkzeugs (50) zum Anziehen von Schraubverbindungen nach einem der Ansprüche 1 bis 4, **gekennzeichnet durch** eine mikroprozessorgesteuerte Steuerungseinheit (22) mit einen Speicher (24), insbesondere zur digitalen Speicherung von gemessenen Drehwinkeldaten.

6. Winkelmesseinrichtung (10) zur Messung des Anziehwinkels eines Betätigungswerkzeugs (50) zum Anziehen von Schraubverbindungen nach einem der Ansprüche 1 bis 5, **dadurch gekennzeichnet, dass** Übertragungsmittel (28) zur Übertragung der gemessenen Drehwinkeldaten an eine externe Verarbeitungseinheit (74) vorgesehen sind.

7. Winkelmesseinrichtung (10) zur Messung des Anziehwinkels eines Betätigungswerkzeugs (50) zum Anziehen von Schraubverbindungen nach Anspruch 6, **dadurch gekennzeichnet, dass** die Übertragungsmittel (28) als Funk-, Infrarot- und/oder Kabelverbindung ausgebildet sind.

8. Winkelmesseinrichtung (10) zur Messung des Anziehwinkels eines Betätigungswerkzeugs (50) zum Anziehen von Schraubverbindungen nach einem der vorherigen Ansprüche, **gekennzeichnet durch** einen Daten- und Steuerbus (26) mit einer Schnittstelle (32), insbesondere einer kabellosen, zu einer mikroprozessorgesteuerten Steuerungseinheit (60) des Betätigungswerkzeugs (50).

9. Winkelmesseinrichtung (10) zur Messung des Anziehwinkels eines Betätigungswerkzeugs (50) zum Anziehen von Schraubverbindungen nach einem der Ansprüche 1 bis 98, **dadurch gekennzeichnet, dass** das Betätigungswerkzeug (50) und/oder die Winkelmesseinrichtung (10) eine Triggervorrichtung (38, 70) aufweist, welche der Winkelmesseinrichtung (10) ein Startsignal und/oder ein Stoppsignal für eine Messung übermittelt.

10. Winkelmesseinrichtung (10) zur Messung des Anziehwinkels eines Betätigungswerkzeugs (50) zum Anziehen von Schraubverbindungen nach einem der Ansprüche 1 bis 9, **dadurch gekennzeichnet, dass** das Betätigungswerkzeug (50) eine Auslöseeinrichtung (78) aufweist, welche das Betätigungswerkzeug (50) bei einem vorgegebenen Winkel auslöst.

11. Winkelmesseinrichtung (10) zur Messung des Anziehwinkels eines Betätigungswerkzeugs (50) zum Anziehen von Schraubverbindungen nach Anspruch 10, **dadurch gekennzeichnet, dass** die Triggervorrichtung (38, 70) ein Signal für die Auslöseeinrichtung (78) zum Auslösen des Betätigungswerkzeug (50) erzeugt.

## Claims

1. An angle measuring device (10) measuring the tightening angle of an operating tool (50) for tightening screwed connections, wherein the angle measuring device (10) is releasable mounted to the operating tool (50), and wherein rotary angle sensors measuring a rotary angle electronically without an external reference are provided, **characterized in that** the angle measuring device (10) comprises fastening means (12) for releasable mounting the measuring device (10) to a lever arm (56) of the operating tool (50) and that the rotary angle sensors are formed as acceleration sensors (20).

2. An angle measuring device (10) measuring the tightening angle of an operating tool (50) for tightening screwed connections according to claim 1, **characterised in that** the rotary angle sensors are formed as gyroscopes.

3. An angle measuring device (10) measuring the tightening angle of an operating tool (50) for tightening screwed connections according to any one of claims 1 to 2, **characterised in that** a display (34) is provided for showing the measured angles respectively.

4. An angle measuring device (10) measuring the tightening angle of an operating tool (50) for tightening screwed connections according to any one of claims 1 to 3, **characterised in that** a connection (18) is provided for using the power supply (62) of the operating tool (50).

5. An angle measuring device (10) measuring the tightening angle of an operating tool (50) for tightening screwed connections according to any one of claims 1 to 4, **characterised by** a microprocessor-operated control unit (22) having a memory (24), in particular for digitally storing measured rotary angle data.

6. An angle measuring device (10) measuring the tightening angle of an operating tool (50) for tightening screwed connections according to any one of claims 1 to 5, **characterised in that** transmission means (28) are provided for transmitting measured rotary angle data to an external processing unit (74).

7. An angle measuring device (10) measuring the tightening angle of an operating tool (50) for tightening screwed connections according to claim 6, **characterised in that** the transmission means (28) are formed as radio, infrared and/or wired connection.

8. An angle measuring device (10) measuring the tightening angle of an operating tool (50) for tightening screwed connections according to any one of the previous claims, **characterised by** a data and control bus (26) having an interface (32), in particular a wireless interface, to a microprocessor-operated control unit (60) of the operating tool (50).

9. An angle measuring device (10) measuring the tightening angle of an operating tool (50) for tightening screwed connections according to any one of claims 1 to 8, **characterised in that** the operating tool (50) and/or the angle measuring device (10) comprises a trigger device (38, 70) transmitting a start signal and/or stop signal for a measurement to the angle measuring device (10).

10. An angle measuring device (10) measuring the tightening angle of an operating tool (50) for tightening screwed connections according to any one of the claims 1 to 9, **characterised in that** the operating tool (50) comprises a release device (78) releasing the operation tool (50) at a predefined angle.

11. An angle measuring device (10) measuring the tightening angle of an operating tool (50) for tightening screwed connections according to claim 10, **characterised in that** the trigger device (38, 70) generates a signal for the release device (78) to release the operation tool (50).

## Revendications

1. Dispositif de mesure angulaire (10) destiné à mesurer l'angle de serrage d'un outil de manoeuvre (50) destiné à serrer des raccords à vis, le dispositif de mesure angulaire (10) étant fixé sur l'outil de manoeuvre (50) de manière amovible, des capteurs de mesure d'angle de rotation étant prévus pour la détection électronique d'un angle de rotation sans référence externe, **caractérisé en ce que** le dispositif de mesure angulaire (10) contient des moyens de fixation (12) destinés à fixer de manière amovible le dispositif de mesure angulaire (10) sur un bras de levier (56) de l'outil de manoeuvre (50) et les capteurs de mesure d'angle de rotation sont configurés sous forme de capteurs d'accélération (20).

2. Dispositif de mesure angulaire (10) destiné à mesurer l'angle de serrage d'un outil de manoeuvre (50) destiné à serrer des raccords à vis selon la revendication 1, **caractérisé en ce que** des capteurs de mesure d'angle de rotation sont configurés sous forme de gyroscopes.

3. Dispositif de mesure angulaire (10) destiné à mesurer l'angle de serrage d'un outil de manoeuvre (50) destiné à serrer des raccords à vis selon l'une quelconque des revendications 1 à 2, **caractérisé en ce qu'**un dispositif d'affichage (34) est prévu pour représenter chaque angle mesuré.

4. Dispositif de mesure angulaire (10) destiné à mesurer l'angle de serrage d'un outil de manoeuvre (50) destiné à serrer des raccords à vis selon l'une quelconque des revendications 1 à 3, **caractérisé en ce qu'**une connexion (18) est prévue pour utiliser la tension d'alimentation (62) de l'outil de manoeuvre (50).

5. Dispositif de mesure angulaire (10) destiné à mesurer l'angle de serrage d'un outil de manoeuvre (50) destiné à serrer des raccords à vis selon l'une quelconque des revendications 1 à 4, **caractérisé par** une unité de commande (22) commandée par microprocesseur et munie d'une mémoire (24), destinée notamment à la sauvegarde numérique des données relatives à l'angle de rotation mesuré.

6. Dispositif de mesure angulaire (10) destiné à mesurer l'angle de serrage d'un outil de manoeuvre (50) destiné à serrer des raccords à vis selon l'une quelconque des revendications 1 à 5, **caractérisé en ce que** des moyens de transmission (28) sont prévus pour transmettre les données relatives à l'angle de rotation mesuré à une unité de traitement externe (74).

7. Dispositif de mesure angulaire (10) destiné à mesurer l'angle de serrage d'un outil de manoeuvre (50) destiné à serrer des raccords à vis selon la revendication 6, **caractérisé en ce que** les moyens de transmission (28) sont configurés sous forme de connexion radio, infrarouge et/ou câblée.

8. Dispositif de mesure angulaire (10) destiné à mesurer l'angle de serrage d'un outil de manoeuvre (50) destiné à serrer des raccords à vis selon l'une quelconque des revendications précédentes, **caractérisé par** un bus de commande et de données (26) muni d'une interface (32), notamment d'une unité de commande (60) sans fil de l'outil de manoeuvre (50) qui est commandée par microprocesseur.

9. Dispositif de mesure angulaire (10) destiné à mesurer l'angle de serrage d'un outil de manoeuvre (50) destiné à serrer des raccords à vis selon l'une quelconque des revendications 1 à 8, **caractérisé en ce que** l'outil de manoeuvre (50) et/ou le dispositif de mesure angulaire (10) présente un trigger (38, 70) transmettant au dispositif de mesure angulaire (10) un signal de démarrage et/ou un signal d'arrêt de la mesure.

10. Dispositif de mesure angulaire (10) destiné à mesurer l'angle de serrage d'un outil de manoeuvre (50) destiné à serrer des raccords à vis selon l'une quelconque des revendications 1 à 9, **caractérisé en ce que** l'outil de manoeuvre (50) présente un dispositif de déclenchement (78) déclenchant l'outil de manoeuvre (50) en présence d'un angle prédéfini.

11. Dispositif de mesure angulaire (10) destiné à mesurer l'angle de serrage d'un outil de manoeuvre (50) destiné à serrer des raccords à vis selon la revendication 10, **caractérisé en ce que** le trigger (38, 70) génère un signal destiné au dispositif de déclenchement (78) en vue du déclenchement de l'outil de manoeuvre (50).
